# EUROPEAN PATENT SPECIFICATION

(11) **EP 4 296 407 B1**
(45) Date of publication and mention of the grant of the patent: **16.09.2026**
(21) Application number: 22183417.9
(22) Date of filing: 06.07.2022
(51) Int. Cl.: D01D 5/098, D01D 4/02, D01D 5/08, D04H 3/16, D01D 4/06

(54) **PLANT FOR MAKING OF MELT-BLOWN TYPE NON-WOVEN FABRIC**
ANLAGE ZUR HERSTELLUNG VON SCHMELZGEBLASENEM VLIESSTOFF
INSTALLATION POUR LA FABRICATION DE TISSU NON TISSÉ DE TYPE PAR FUSION-SOUFFLAGE

(30) Priority: 21.06.2022 IT 202200013132
(43) Date of publication of application: 27.12.2023
(73) Proprietor: Fratelli Ceccato Milano S.r.l., 20123 Milano (IT)
(72) Inventor: ANGELICO, Mr. Giuseppe, I-20095 CUSANO MILANINO (Milano) (IT)
(74) Representative: Lunati & Mazzoni S.r.L.

(56) References cited:
- CN-A- 111 850 707
- US-A1- 2006 084 341
- US-A1- 2021 277 538
- US-A1- 2021 310 156

## Description

The present invention relates to a plant for making of melt-blown type non-woven fabric of the type specified in the preamble to the first claim.

More particularly, the present invention relates to a plant for extruding polymer filaments for directly or indirectly producing non-woven fabric.

A similar plant is disclosed within patent application CN-A-111850707. uments US 2021/0310156 A1, US 2021/0277538 A1 and US 2006/0084341 A1 disclose further background art relating to melt-blown devices.

As is well known, non-woven fabric is an industrial product similar to a textile but obtained by processes other than weaving and knitting. Therefore, within a non-woven fabric, the fibres present a random pattern, without any ordered structure being identified, whereas in a woven fabric, the fibres present two prevailing and orthogonal directions, usually referred to as warp and weft.

Currently, a plurality of products containing non-woven fabrics is produced, depending on the manufacturing technique used, which is mainly related to the use of the product itself.

In particular, the high quality non-woven fabrics are distinguished for hygienic-sanitary products and the low quality non-woven fabrics in use especially for the geotex. From a technical point of view, non-woven fabrics can basically be divided into spunlace, spunbond and melt-blown. The spunlace fabric undergoes processing that gives the material equi-directional strength. Thanks to this property, to the possibility of being produced in different materials such as viscose, polyester, cotton, polyamide and microfibre, to the two possible finishes, i.e. smooth or perforated, and to the multitude of smooth or printed colours, the spunlance is suitable for the hygienic-sanitary sector, as well as for the automotive, cosmetic, industrial or disposable sectors.

The spunbond, usually made from polypropylene, is a non-woven fabric with many applications in the agricultural, sanitary, construction, furniture, mattress and other related sectors. Through appropriate treatment, a series of highly specific products can be produced for each sector: fluorescent, soft calendered, anti-mite, flame retardant, antibacterial, anti-static, anti-UV and others. Numerous finishes such as printed, laminated, flexo-printed and self-adhesive can also be applied to the spundbond.

The melt-blown non-woven is made through specific spinnerets in order to achieve higher technical characteristics than previous melt-blown non-woven fabric.

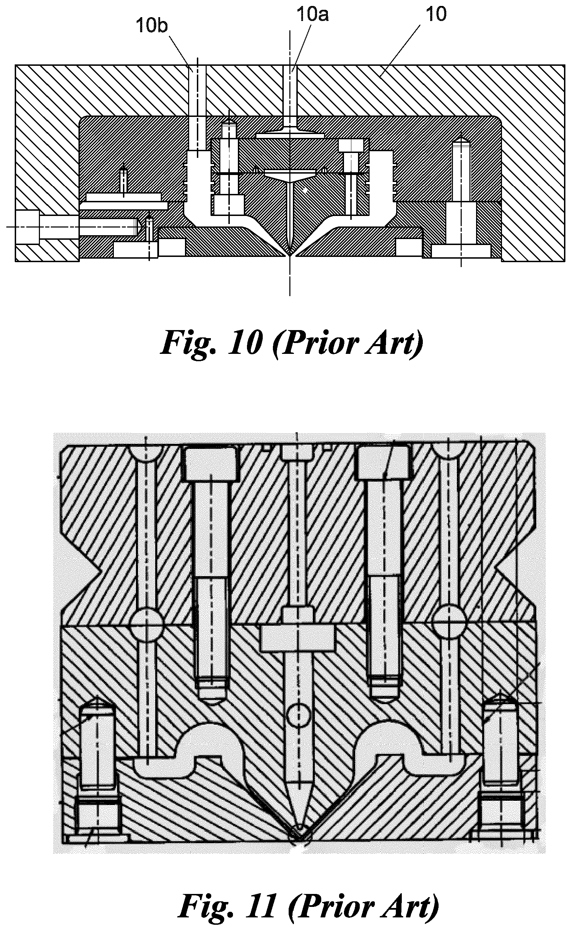

In fact, the melt-blown fabric is characterised by fibres with high filtering power for both liquid and aeriform substances. The production plant of melt-blown non-woven traditionally consist of components as shown in Figs. 10-11.

They consist of a case that encloses the melt-blown fibre realisation device and all the parts that are required for the process to function properly. In addition, the known plants generally comprise a first support, a breaker plate, a pinnacle spinneret, a second support and an air blade.

The purpose of the breaker sheet or breaker plate is to channel and filter the polymer, usually polypropylene, to the pinnacle spinneret. The latter is a device comprising, as anticipated, a perforated pinnacle portion to allow the polypropylene to exit under pressure.

The first support is essentially a connecting element between the case and the breaker-plate, while the second support is used to support the air blade and is arranged in such a way as to close the breaker-plate and the met-blown device inside the case. Sometimes, the second support and the plates defining the air blade may coincide, limiting the components of the system. The air blade, on the other hand, consists of a casing that wraps around the pinnacle of the melt-blown device in such a way as to direct a flow of air, possibly non-turbulent, towards the holes in the pinnacle.

From a procedural point of view, the polymer material enters the case and begins its journey through it at a temperature of approximately 240-270 °C.

It is first directed to the first support, then to the breaker plate and finally to the pinnacle spinneret and, in particular, pressurised towards the holes on the pinnacle.

Typically, the pinnacle comprises 30 to 50 holes/inch aligned along a main direction with diameters varying between 0.15 mm and 0.4 mm and with a hole depth varying between 10-13 times the size of the diameter.

As soon as the polymer emerges from the pinnacle holes, it is hit by the flow of air from the two sides defined by the air blade.

The air blade basically consists of two conduits converging to an ejection gap, or slit, extending between 0.7 and 2 mm into which the air exits at approximately 180°.

The acceleration of the air inside the blade makes it possible to create a flow that, on contact with the polymer, atomises the latter, producing sprays comprising very fine particles that, in turn, settle on mats that can be moved at high speed.

The case, therefore, in addition to including the polymer inlet channel, includes air inlet channels to feed the air blade.

The known technique described includes some major drawbacks.

In particular, the melt-blown plants of the known technique define a fixed configuration through which essentially only one or more rows of non-woven fabric can be deposited from the same pinnacle.

Therefore, if a second row of polymer filament is to be deposited on the conveyor roller, it is necessary to have a second device comprising at least a case, support plate, breaker plate, pinnacle spinneret and air blade.

Naturally, this necessity has a huge impact in economic terms, basically given by the sum of the equipment costs, plus the sum of the operating and maintenance costs.

In this situation, the technical task at the basis of the present invention is to devise a plant for making of melt-blown type non-woven fabric capable of substantially obviating at least part of the aforementioned drawbacks.

In the context of said technical task, it is an important scope of the invention to obtain a plant for making of melt-blown type non-woven fabric capable of making more than a single row of polymer filament.

It is also an important scope of the invention to achieve a plant for making of melt-blown type non-woven fabric which allows to reduce the number of components required to realise the aforementioned advantages.

Furthermore, a further scope of the invention is to realise a plant for making of melt-blown type non-woven fabric which allows the components of conventional plants to be used at least in part so as to reduce the conversion costs of the plants.

In conclusion, another purpose of the invention is to obtain a plant for making of a melt-blown type non-woven fabric that is economical both from an operational and maintenance point of view.

The specified technical task and purposes are achieved by a plant for making of melt-blown type non-woven fabric as claimed in the appended claim 1.

Preferred technical solutions are highlighted in the dependent claims.

The features and advantages of the invention are hereinafter clarified by the detailed description of preferred embodiments of the invention, with reference to the appended drawings, in which:
the **Fig. 1** illustrates a cross-sectional view of a plant for making of melt-blown type non-woven fabric according to the invention in which the transfer device is integrally included in the dispenser;
the **Fig. 2** illustrates a cross-sectional and exploded view of a plant for making of melt-blown type non-woven fabric according to the invention;
the **Fig. 3** is a perspective view from below of a plant for making of melt-blown type non-woven fabric according to the invention;
the **Fig. 4** is a perspective view from below and an exploded view of a plant for making of melt-blown type non-woven fabric according to the invention;
the **Fig. 5a** shows a main plane view of the branch ends of the transfer device of a plant for making of melt-blown type non-woven fabric according to the invention in which only one main end and one secondary end of the same assembly are aligned;
the **Fig. 5b** illustrates a view in the main plane of the branch ends of the transfer device of a plant for making of melt-blown type non-woven fabric according to the invention in which all the ends of the same group are aligned;
the **Fig. 6** illustrates a cross-sectional view of a plant for making of melt-blown type non-woven fabric according to the invention in which the transfer device is entirely included in the spinneret;
the **Fig. 7** is a cross-sectional view of a plant for making of melt-blown type non-woven fabric according to the invention in which the transfer device comprises a plurality of main accesses each in fluid passage connection with a respective main outlet;

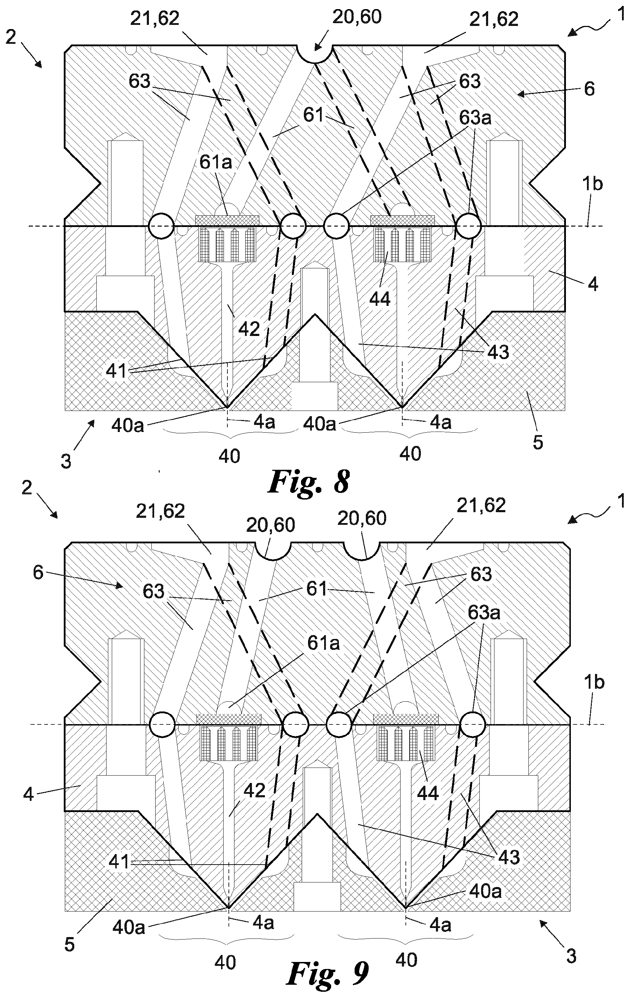

the **Fig. 8** is a cross-sectional view of a plant for making of melt-blown type non-woven fabric according to the invention in a further embodiment wherein the distributor comprises a main access in fluid passage connection with a respective main outlet and the branches are mutually crossed in an alternative manner with respect to the plant of Figs. 1-4;
the **Fig. 9** is a cross-sectional view of a plant for making of melt-blown type non-woven fabric according to the invention in a further embodiment in which the distributor comprises a plurality of main accesses each in fluid passage connection with a respective main outlet and the branches are mutually crossed in an alternative manner with respect to the plant of Fig. 7;
the **Fig. 10** depicts a cross-sectional view of a plant for making of melt-blown type non-woven fabric of the known technique; and
the **Fig. 11** depicts a cross-sectional view of a plant for making of melt-blown type non-woven fabric of the known technique.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the Figures, the plant for making of melt-blown type non-woven fabric according to the invention is globally referred to by the number 1.

The plant 1 is preferably configured for making non-woven fabric on the basis of melt-blown technology. The latter, in general, provides for melt-blown polymeric material to be extruded by means of a plurality of micrometre-sized nominal holes designed to distribute the polymer filaments directed towards a conveyor belt or to introduce the polymer filaments within a hole in a pinnacle in contact with one or more air blades.

In this regard, the plant 1 comprises, some elements of the known technique. Preferably, the plant 1 comprises at least one distributor 2.

The distributor 2 is substantially a device for allowing the distribution of polymeric fluid and air within respective ducts for creating a diffusion path.

The distributor 2 is, therefore, configured to be operatively connected to a case 10. The case 10 is essentially a conventional element of a melt-blown system. In particular, the case 10 is the portion through which the polymeric fluid and gas are conveyed to the distributor 2.

Thus, the case 10 comprises at least one main conduit 10a suitable for conveying polymeric fluid and a plurality, for example a pair, of secondary conduits 10b suitable for conveying gas.

The distributor 2 thus comprises at least one main access 20.

The main access 20 is capable of being placed in fluid passage connection with the main conduit 10a. Thus, the main access 20 is the portion through which the polymeric fluid accesses the distributor 2.

The distributor 2 further comprises at least one secondary access **21.** Preferably, the distributor 2 comprises a plurality of secondary accesses 21.

The secondary accesses are capable of being placed in fluid passage connection each with a respective secondary conduit 10b. Thus, the secondary accesses 21 define the portions through which gas accesses the distributor 2.

The system 1 further comprises at least one dispenser **3.**

The dispenser 3 is in fluid passage connection with the distributor 2. In particular, the dispenser 3 receives from the distributor 2 both polymeric fluid and gas.

Thus, the dispenser 3 is configured to dispense polymeric filaments from the polymeric fluid.

Therefore, in this regard, the dispenser 3 comprises at least one spinneret **4.**

The spinneret 4 is substantially capable of forming polymeric filaments. Therefore, the spinneret 4 is the portion of the system 1 configured to extrude the polymeric fluid in the form of a filament.

The dispenser 3 further comprises an air blade 5. The air blade 5 is substantially adapted to receive the gas to guide the polymeric filaments exiting the dispenser 3. The components just described are substantially common to all melt-blown plants. Furthermore, as is well known, the distributor 2 and the dispenser 3 develop prevalently along a main direction **1a.**

The main direction 1a is the direction of extension of the plant and, in particular, of the polymer filament dispensing line.

The plant 1 is subsequently described in relation to sections normal to the main direction 1a of the plant 1 itself, taking into account that substantially the described components are periodically or continuously distributed along the main direction 1a. The plant 1 comprises, in fact, certain peculiar features.

In particular, advantageously, the spinneret 4 comprises a plurality of pinnacles **40.**

The pinnacles 40 are substantially pointed elements from the pointed end of which filaments of already formed polymeric fluid emerge. In particular, at the end of each pinnacle 40 the air blade 5 conveys gas, typically air, to guide the polymeric fluid out of the dispenser 3.

The pinnacles 40 are thus mutually flanked. This means that the pinnacles 40 run parallel to the main direction 1 side by side.

Preferably, but not necessarily, the pinnacles 40 are in one piece. Therefore, the 40 peaks belong to the same spinneret 4 or spinneret.

In other words, therefore, advantageously, plant 1 comprises a spinneret 4 multi-pinnacle 40. Advantageously, the spinneret 4 multi-pinnacle 40 is arranged within a single melt-blown plant 1. The pinnacles 40 may be two or more in number.

Thus, each pinnacle 40 comprises at least one main outlet **40a.** The main outlet 40a is substantially configured to convey polymeric fluid along a respective delivery direction **4a.** Thus, the main outlet 40a corresponds to the outlet dispenser of the pinnacle 40. The delivery direction 4a of each main outlet 40a is normal, or skewed, with respect to the main direction 1a. Furthermore, preferably, the main outlets 40a are configured such that the delivery directions 4a are mutually parallel.

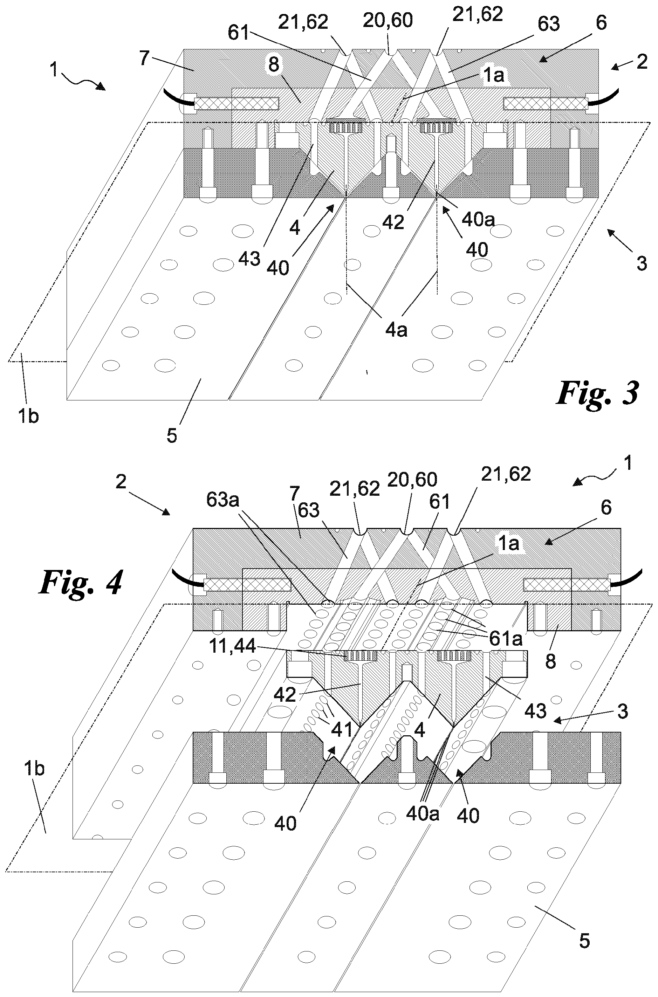

Naturally, the pinnacle 40 includes, as already mentioned, at least one main outlet 40a in the sectional view. When considering the entire depth of the spinneret 4, the pinnacle 40 comprises a plurality of main outlets 40a also distributed along or parallel to the main direction 1a, as clearly shown for example in Fig. 4.

The spinneret 4 further preferably comprises, for each pinnacle 40, a pair of secondary outlets **41.**

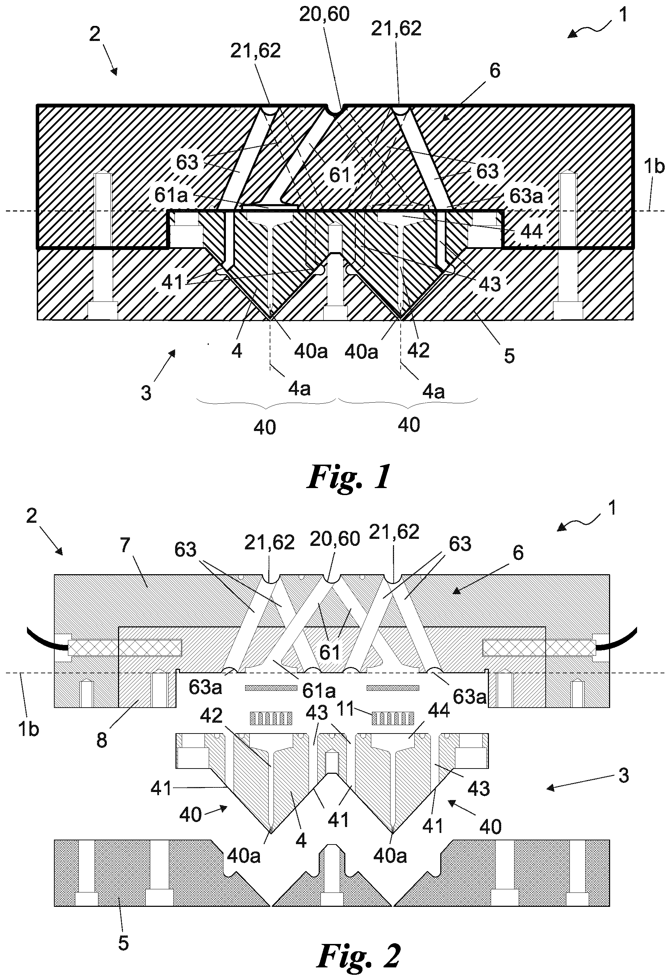

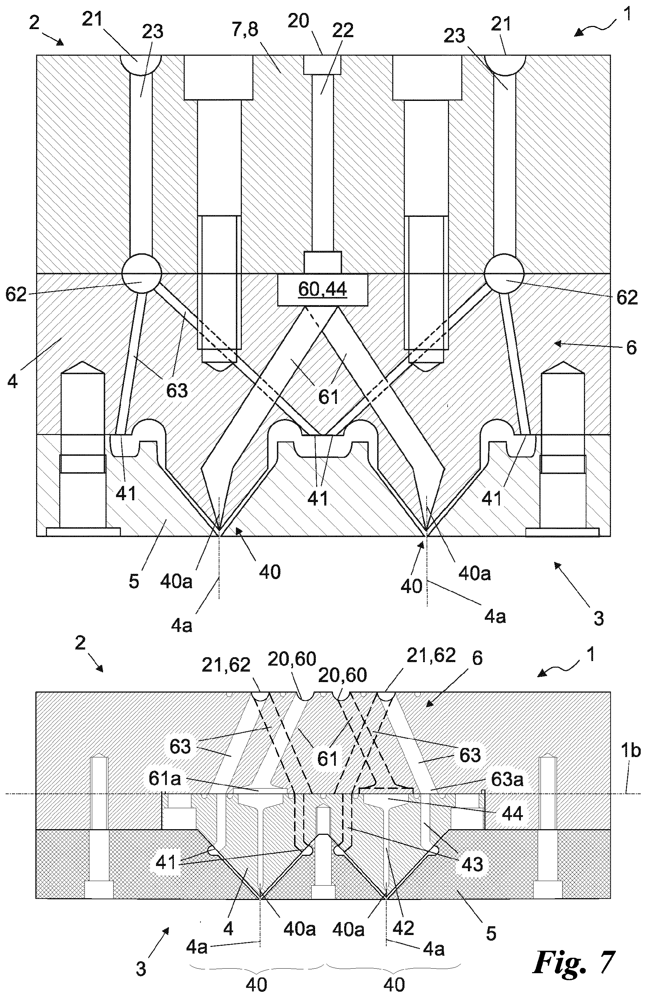

The secondary outlets 41 are preferably arranged at opposite sides relative to the respective pinnacle 40. By this it is meant that the secondary outlets 41 may be formed on the pinnacle 40 itself, as shown in the embodiment form of Figs. 1-4, or they may be formed at the sides of the pinnacle 40, as shown in the embodiment form of Fig. 6. As with the main outlets 40, of course, the secondary outlets 41 are preferably distributed along or parallel to the main direction 1a.

The air blade 5 is therefore, advantageously, configured to convey gas jets to converge towards each of the delivery directions 4a. In this way, the gas jets meet at the main outlet 40a of each spinneret 40 and guide the polymer filament exiting the dispenser 3, in particular along the delivery direction 4a.

Naturally, the air blade 5 also runs predominantly along the main direction 1a. Thus, in detail, the air blade 5 may define a slot expanding parallel to the main direction 1a at each main outlet 40a, i.e. parallel to the tip of each pinnacle 40.

The plant 1 additionally comprises a transfer device **6.**

The transfer device 6 is, advantageously, configured to place in fluid passage connection at least each secondary access 21 with each pair of secondary outlets 41. Further, in an embodiment, the transfer device 6 may also advantageously be configured to place in fluid passage connection the main access 20 with each of the main outlets 40a.

Or, alternatively, the transfer device 6 may also be configured to place in fluid passage connection a plurality of main accesses 20 with respective main outlets 40a.

Thus, the transfer device 6 allows at least part of the conventional facilities to be used to convey polymeric fluid and gas to the spinneret 4 of the facility 1.

In more detail, the transfer device 6 comprises at least one main inlet **60.**

The main inlet 60 is in fluid passage connection with the main inlet 20. Therefore, the main inlet 60 is capable of receiving polymeric fluid from the main inlet 20. Furthermore, the transfer device 6 comprises a plurality of main branches **61.**

The main branches 61 are all in fluid transfer connection with the main inlet 60. Further, each of the main branches 61 is in fluid passage connection with a respective main outlet 40a.

If the system comprises a plurality of main accesses 20, each main branch 41 is in fluid passage connection with a respective main inlet 60 and a respective main outlet 40a. Thus, the main branches 61 substantially transfer polymeric fluid from the main inlet 60 to each of the main outlets 40a.

Advantageously, the transfer device 6 also comprises a plurality of secondary inlets **62.** Each of the main inlets 62 is in fluid transfer connection with a respective secondary inlet 21. Thus, each main inlet 62 receives gas, for example air, from a secondary access 21. Further, the transfer device 6 comprises a plurality of pairs of secondary branches **63.**

In each pair, the secondary branches 63 are in fluid passage connection all with a respective secondary inlet 62. Furthermore, in the same pair, each of the secondary branches 63 is in fluid passage connection with a respective secondary outlet 41 of a pair of secondary outlets 41, i.e., secondary outlets 41 at the same pinnacle 40.

In order to realise such configurations, several solutions are possible.

For example, in a first embodiment shown in Figs. 1-4, the transfer device 6 can be entirely included in the distributor 2.

Thus, in this context, the main input 60 preferably corresponds to the main access 20 and each secondary input 62 corresponds to a respective secondary access 21. Thus, the spinneret 4 may comprise, for each pinnacle 40, a main delivery channel **42** and a pair of secondary delivery channels **43.**

The main delivery channel 42 is preferably configured to place in fluid passage connection a main branch 61 and the main outlet 40a.

Each of the pair of secondary delivery channels 43 is configured to place in fluid passage connection a respective secondary branch 63 with a respective secondary outlet 41 of the same said pair of secondary outlets 41.

In this embodiment, therefore, the spinneret 4 defines conventional characteristics. The distributor 2, on the other hand, comprises the transfer device 6.

The distributor 2 may be in one piece, or divided into two different blocks.

For example, the distributor 2 may comprise a support plate 7 and a breaker plate **8.** The support plate 7, as is known, is an interface element normally arranged between case 10 and breaker plate 8. The breaker plate 8 is a connecting plate between support plate 7 and spinneret 4.

Advantageously, the transfer device 6 may be integrally included in one or more of the support plate 7 and the breaker plate 8. By this it is meant that the transfer device 6 may be expanded in one between the support plate 7 and the breaker plate 8, or it may be expanded partly in the support plate 7 and partly in the breaker plate 8.

In a second embodiment as shown in Fig. 6, the transfer device 6 may be entirely comprised in the spinneret 4.

In this case, the spinneret 4 no longer includes conventional features as previously shown. Furthermore, the transfer device 2 comprises a main delivery channel **22** and a secondary delivery channel **23.**

The main delivery channel 22 is configured to place the main access 20 and the main entrance 60 in fluid passage connection.

Each of the secondary delivery channels 23 is, on the other hand, configured to place in fluid passage connection a respective secondary access 21 with a respective secondary inlet 62.

As already explained, the description is made considering a section of the plant normal to the main direction 1a.

However, the plant 1 also expands along the main direction 1a.

Therefore, the plant 1 may define a main plane **1b** along which at least part of the plant is expanded.

The main plane 1b is parallel to the main direction 1a. Moreover, even more in detail, the main plane 1b is a virtual or even physical interface plane accessed by the ends of main branches 61 and secondary branches 63.

In detail, each of the main branches 61 defines a main end **61a.**

The main end 61a is substantially opposite the main inlet 60.

In contrast, each of the secondary branches 63 defines a secondary end **63a.** The secondary end 63a is preferably opposite the secondary inlet 62.

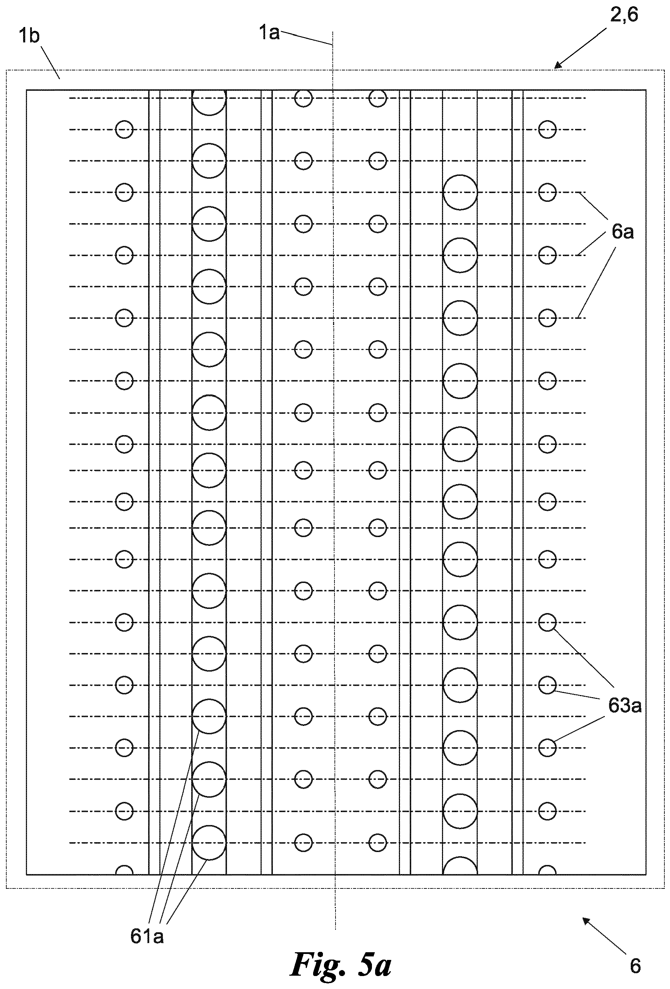

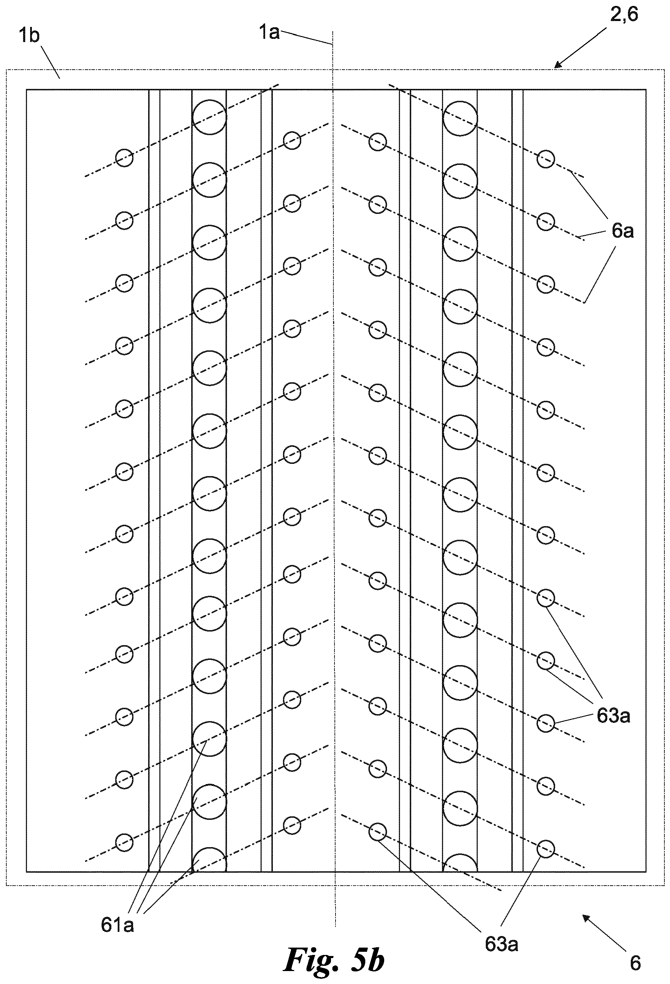

Thus, the ends 61a, 63a are distributed on the main plane 1b such that, for each pinnacle 40 and for each group including a main end 61a and a pair of adjacent secondary ends 63a, at least the secondary ends 63a are mutually misaligned with respect to directions normal to the main direction 1a, as shown in Fig. 5a. Alternatively, all of the ends 61a, 63a may be mutually misaligned with respect to directions normal to the main direction 1a, as shown in Fig. 5b.

In other words, the ends 61a, 63a which are upstream or downstream of the same pinnacle 40 and which are adjacent to each other belong to the same group.

Even more in detail, preferably, for each pinnacle 40 and for each group, at least one main end 61a and one secondary end 63a of the same group are mutually aligned along expansion directions **6a.** The expansion directions 6a are transverse to the main direction 1a.

Furthermore, the expansion directions 6a are preferably mutually parallel, as explicitly shown in Fig. 5.

This configuration advantageously prevents the various branches 61, 63 from intersecting each other.

In conclusion, the system 1 may define further detailed features.

For example, the spinneret 4 may comprise at least one seat **44.**

If present, the seat 44 is configured to house at least one filter **11.** The filter 11 may be in a spongy element suitable for filtering the polymeric fluid entering the spinneret 4. Therefore, the seat 44 is preferably arranged adjacent to the distributor 2.

In particular, the seat 44 may be arranged, preferably in the second form of embodiment, between the main inlet 60 and the main delivery channel 22. Or, the seat 44 may be arranged, preferably in the first form of embodiment, between each of said main branch 61 and a respective main delivery channel 42.

The plant 1 may, of course, also comprise the filter 11 and the case 10.

The operation of the plant for making of melt-blown type non-woven fabric 1 described above in structural terms is substantially similar to the operation of any plant for making of melt-blown type non-woven fabric.

However, the plant 1 allows a plurality of parallel rows to be made, parallel to the main direction 1a, due to the fact that a plurality of flanked pinnacles can be exploited.

The plant 1 for making melt-blown non-woven fabric according to the invention achieves important advantages.

Indeed, the plant 1 allows for the realisation of more than a single row of polymer filament. The possibility of using a plurality of side-by-side pinnacles makes it possible to improve the quality of the non-woven fabric and to increase production speed.

Furthermore, the plant 1 allows, in return for the aforementioned advantages, to reduce the number of components required for dispensing a plurality of rows, and also allows to exploit at least part of the plants of the known technique since the device may comprise at least cases, and possibly also dispensers 2, conventional.

Thus, the device 1 allows for lower conversion costs of the installations and is, in any case, cheaper both from an operational and maintenance point of view.

The invention is susceptible to variations within the scope of the inventive concept as defined by the claims.

For example, in an alternative embodiment, as shown in Fig. 7, the distributor 2 of the system 1 could comprise a plurality of main accesses 20. Thus, the transfer device 6 could also be configured to place in fluid passage connection each main access 20 with a respective main outlet 40a. In this case, each main access 20 could correspond to a main inlet 60 and each main inlet 60 could be placed in fluid passage connection with a respective main outlet 40a via a single main branch 61.

This configuration can be easily employed to convey two polymers of different types at the outlet of the dispenser in such a way as to make several non-woven fabrics or non-woven fabrics comprising filaments of different materials, i.e. made from different polymers.

In this respect, all details can be replaced by equivalent elements and the materials, shapes and dimensions can be any.

## Claims

1. Plant (1) for making of melt-blown type non-woven fabric comprising:
- a distributor (2) configured to be operatively connected to a case (10) and including at least one main access (20) suitable to be placed in fluid passage connection with a main conduit (10a) of said case (10) suitable to convey polymeric fluid and a plurality of secondary accesses (21) suitable to be placed in fluid passage connection each with a respective secondary conduit (10b) of said case (10) suitable to convey gas;
- a dispenser (3) in fluid passage connection with said distributor (2), configured to dispense polymeric filaments from said polymeric fluid and including at least:
- one spinneret (4) suitable to form said polymeric filaments and comprising:
- a plurality of pinnacles (40) mutually flanked and each comprising at least one main outlet (40a) configured to guide said polymeric fluid along a respective delivery direction (4a),
- for each pinnacle (40) a pair of secondary outlets (41) arranged at opposite sides relative to said respective pinnacle (40), formed on the pinnacle (40) itself or at the sides of the pinnacle (40), and
- an air blade (5) suitable to receive said gas from said secondary outlets (41) to guide said polymeric filaments exiting said dispenser (3) and adapted to convey jets of said gas to converge towards each of said delivery direction (4a) so as to guide said polymer filaments;
- a transfer device (6) configured to place in fluid passage connection at least each secondary access (21) with each said pair of secondary outlets (41) and comprising at least one main inlet (60) in fluid passage connection with said main access (20), a plurality of main branches (61) in fluid passage connection all with said main inlet (60) or each with a respective said main inlet (60) and each with a respective said main outlet (40a), a plurality of secondary inlets (62) each in fluid passage connection with a respective said secondary access **of** (21), and a plurality of pairs of secondary branches (63)
wherein in each pair said secondary branches (63) are in fluid passage connection all with a respective said secondary inlet (62) and each with a respective said secondary outlet (41) of a respective said pair of secondary outlets (41);
- said distributor (2) and said dispenser (3) being predominantly along a main direction (1a), each of said main branches (61) defines a main end (61a) opposite said main inlet (60), each of said secondary branches (63) defines a secondary end (63a) opposite said secondary inlet (62); and
said plant (1) being **characterised in that**
- said ends (61a, 63a) are distributed in a main plane (1b) parallel to said main direction (1a) in such a manner that, for each pinnacle (40) and for each group including a said main end (61a) and a pair of adjacent said secondary ends (63a), at least said secondary ends (63a) are mutually misaligned with respect to directions normal to said main direction (1a).

2. Plant (1) according to claim 1, wherein said delivery directions (4a) are mutually parallel.

3. Plant (1) according to any preceding claim, wherein said pinnacles (40) are in one piece.

4. Plant (1) according to any preceding claim, wherein said distributor (2) comprises a plurality of secondary accesses and said transfer device (6) is further configured to place in fluid passage connection each main access (20) with a respective said main outlet (40a).

5. Plant (1) according to any preceding claim, wherein said transfer device (6) is further configured to place in fluid passage connection said main access (20) with each of said main outlets (40a).

6. Plant (1) according to any one of the preceding claims, wherein said transfer device (6) is entirely included in said spinneret (4) and said distributor (2) comprises a main delivery channel (22) configured to place in fluid passage connection said main access (20) and said main inlet (60) and a plurality of secondary delivery channels (23) each configured to place in fluid passage connection a respective said secondary access (21) with a respective said secondary inlet (62).

7. Plant (1) according to any one of claims 1-5, wherein said transfer device (6) is integrally comprised in said distributor (2), said main inlet (60) corresponds to said main access (20), each said secondary inlet (62) corresponds to a respective said secondary access (21), and said spinneret (4) comprises, for each said pinnacle (40) a main delivery channel (42) configured to place in fluid passage connection a respective said main branch (61) and said main outlet (40a) and a pair of secondary delivery channels (43) each configured to place in fluid passage connection a respective said secondary branch (63) of a same said pair of secondary branches (63) with a respective said secondary outlet (41) of a same said pair of secondary outlets (41).

8. Plant (1) according to any preceding claim, wherein said distributor (2) comprises a support plate (7) and a breaker plate (8) and said transfer device (6) is integrally comprised in one or more between said support plate (7) and said breaker plate (8).

9. Plant (1) according to any preceding claim, wherein said ends (61a, 63a) are distributed in a main plane (1b) such that all said ends (61a, 63a) of the same said group result to be mutually misaligned with respect to directions normal to said main direction (1a).

10. Plant (1) according to any preceding claim, wherein for each pinnacle (40) and for each said group, at least one said main end (61a) and one said secondary end (63a) are mutually aligned along development directions (6a) transverse to said main direction (1a).

11. Plant (1) according to any preceding claim, wherein said spinneret (4) comprising at least one seat (44) configured to accommodate at least one filter (11) and disposed adjacent to said distributor (2).

12. Plant (1) according to any preceding claim, wherein said seat (44) is disposed between said main inlet (60) and said main delivery channel (22) or between each of said main branch (61) and a respective said main delivery channel (42).

## Patentansprüche

1. Anlage (1) zur Herstellung eines Schmelzblasvlieses, umfassend:
- einen Verteiler (2), der dazu konfiguriert ist, operativ mit einem Gehäuse (10) verbunden zu werden und enthaltend mindestens einen Hauptzugang (20), der dazu geeignet ist, in Fluiddurchgangsverbindung mit einer Hauptleitung (10a) des Gehäuses (10) gebracht zu werden, die dazu geeignet ist, Polymerfluid zu fördern, sowie eine Mehrzahl von Nebenzugängen (21), die jeweils dazu geeignet sind, in Fluiddurchgangsverbindung mit einer jeweiligen Nebenleitung (10b) des Gehäuses (10) gebracht zu werden, die dazu geeignet ist, Gas zu fördern;
- einen Spender (3), der in Fluiddurchgangsverbindung mit dem Verteiler (2) steht, der dazu konfiguriert ist, Polymerfilamente aus dem Polymerfluid auszugeben, und mindestens enthaltend:
- eine Spinndüse (4), die dazu geeignet ist, die Polymerfilamente zu bilden, und umfassend:
- eine Mehrzahl von Spitzen (40), die nebeneinander angeordnet sind und jeweils mindestens einen Hauptauslass (40a) umfassen, der dazu konfiguriert ist, das Polymerfluid entlang einer jeweiligen Verteilungsrichtung (4a) zu führen,
- für jede Spitze (40) ein Paar von Nebenauslässen (41), die an gegenüberliegenden Seiten in Bezug auf die jeweilige Spitze (40) angeordnet sind und an der Spitze (40) selbst oder an den Seiten der Spitze (40) ausgebildet sind, und
- ein Luftmesser (5), das dazu geeignet ist, das Gas von den Nebenauslässen (41) aufzunehmen, um die aus dem Spender (3) austretenden Polymerfilamente zu führen, und dazu eingerichtet ist, Strahlen des Gases zu fördern, sodass sie zu jeder der Verteilungsrichtung (4a) zusammenlaufen, um die Polymerfilamente zu führen;
- eine Übertragungsvorrichtung (6), die dazu konfiguriert ist, in Fluiddurchgangsverbindung mindestens jeden Nebenzugang (21) mit jedem Paar von Nebenauslässen (41) zu bringen, und umfassend mindestens einen Haupteinlass (60), der in Fluiddurchgangsverbindung mit dem Hauptzugang (20) steht, eine Mehrzahl von Hauptzweigen (61), die alle in Fluiddurchgangsverbindung mit dem Haupteinlass (60) oder jeweils mit einem jeweiligen Haupteinlass (60) und jeweils mit einem jeweiligen Hauptauslass (40a) stehen, eine Mehrzahl von Nebeneinlässen (62), die jeweils in Fluiddurchgangverbindung mit einem jeweiligen Nebenzugang (21) stehen, sowie eine Mehrzahl von Paaren von Nebenzweigen (63),
wobei in jedem Paar die Nebenzweige (63) alle in Fluiddurchgangsverbindung mit einem jeweiligen Nebeneinlass (62) und jeweils mit einem jeweiligen Nebenauslass (41) eines jeweiligen Paares von Nebenauslässen (41) stehen;
- wobei der Verteiler (2) und der Spender (3) sich überwiegend entlang einer Hauptrichtung (1a) befinden, jeder der Hauptzweige (61) ein Hauptende (61a) definiert, das dem Haupteinlass (60) gegenüberliegt, jeder der Nebenzweige (63) ein Nebenende (63a) definiert, das dem Nebeneinlass (62) gegenüberliegt; und **dadurch gekennzeichnet, dass**
- die Enden (61a, 63a) in einer Hauptebene (1b) verteilt sind, die sich parallel zu der Hauptrichtung (1a) erstreckt, sodass für jede Spitze (40) und für jede Gruppe enthaltend ein Hauptende (61a) und ein Paar angrenzender Nebenenden (63a), mindestens die Nebenenden (63a) in Bezug auf Richtungen, die sich senkrecht zu der Hauptrichtung (1a) erstrecken, gegeneinander versetzt sind.

2. Anlage (1) nach Anspruch 1, wobei die Verteilungsrichtungen (4a) zueinander parallel sind.

3. Anlage (1) nach einem der vorhergehenden Ansprüche, wobei die Spitzen (40) einstückig ausgebildet sind.

4. Anlage (1) nach einem der vorhergehenden Ansprüche, wobei der Verteiler (2) eine Mehrzahl von Nebenzugängen umfasst und die Übertragungsvorrichtung (6) ferner dazu konfiguriert ist, jeden Hauptzugang (20) in Fluiddurchgangsverbindung mit einem jeweiligen Hauptauslass (40a) zu bringen.

5. Anlage (1) nach einem der vorhergehenden Ansprüche, wobei die Übertragungsvorrichtung (6) ferner dazu konfiguriert ist, den Hauptzugang (20) in Fluiddurchgangsverbindung mit jedem der Hauptauslässe (40a) zu bringen.

6. Anlage (1) nach einem der vorhergehenden Ansprüche, wobei die Übertragungsvorrichtung (6) vollständig in der Spinndüse (4) enthalten ist und der Verteiler (2) einen Hauptverteilungskanal (22) umfasst, der dazu konfiguriert ist, den Hauptzugang (20) und den Haupteinlass (60) in Fluiddurchgangsverbindung zu bringen und eine Mehrzahl von Nebenverteilungskanälen (23), die jeweils dazu konfiguriert sind, einen jeweiligen Nebenzugang (21) in Fluiddurchgangsverbindung mit einem jeweiligen Nebeneinlass (62) zu bringen.

7. Anlage (1) nach einem der Ansprüche 1 bis 5, wobei die Übertragungsvorrichtung (6) vollständig in dem Verteiler (2) enthalten ist, der Haupteinlass (60) dem Hauptzugang (20) entspricht, jeder Nebeneinlass (62) einem jeweiligen Nebenzugang (21) entspricht und die Spinndüse (4) für jede Spitze (40) einen Hauptverteilungskanal (42) umfasst, der dazu konfiguriert ist, einen jeweiligen Hauptzweig (61) in Fluiddurchgangsverbindung mit einem jeweiligen Hauptauslass (40a) zu bringen und ein Paar von Nebenverteilungskanälen (43), die jeweils dazu konfiguriert sind, einen jeweiligen Nebenzweig (63) desselben Paares von Nebenzweigen (63) in Fluiddurchgangsverbindung mit einem jeweiligen Nebenauslass (41) desselben Paares von Nebenauslässen (41) zu bringen.

8. Anlage (1) nach einem der vorhergehenden Ansprüche, wobei der Verteiler (2) eine Tragplatte (7) und eine Lochplatte (8) umfasst und die Übertragungsvorrichtung (6) vollständig in einem oder mehreren zwischen der Tragplatte (7) und der Lochplatte (8) enthalten ist.

9. Anlage (1) nach einem der vorhergehenden Ansprüche, wobei die Enden (61a, 63a) in einer Hauptebene (1b) verteilt sind, sodass alle Enden (61a, 63a) derselben Gruppe in Bezug auf Richtungen, die sich senkrecht zu der Hauptrichtung (1a) erstrecken, gegeneinander versetzt sind.

10. Anlage (1) nach einem der vorhergehenden Ansprüche, wobei für jede Spitze (40) und für jede Gruppe mindestens ein Hauptende (61a) und ein Nebenende (63a) entlang Entwicklungsrichtungen (6a), die sich quer zu der Hauptrichtung (1a) erstrecken, miteinander ausgerichtet sind.

11. Anlage (1) nach einem der vorhergehenden Ansprüche, wobei die Spinndüse (4) mindestens einen Sitz (44) umfasst, der dazu konfiguriert ist, mindestens einen Filter (11) aufzunehmen, und angrenzend an dem Verteiler (2) angeordnet ist.

12. Anlage (1) nach einem der vorhergehenden Ansprüche, wobei der Sitz (44) zwischen dem Haupteinlass (60) und dem Hauptverteilungskanal (22) oder zwischen jedem der Hauptzweige (61) und einem jeweiligen Hauptverteilungskanal (42) angeordnet ist.

## Revendications

1. Installation (1) pour la fabrication d'un tissu non tissé de type melt-blown comprenant :
- un distributeur (2) configuré pour être relié de manière opérationnelle à un boîtier (10) et comprenant au moins un accès principal (20) adapté à être placé en communication de passage de fluide avec un conduit principal (10a) dudit boîtier (10), adapté à acheminer un fluide polymérique, et une pluralité d'accès secondaires (21) adaptés à être placés chacun en communication de passage de fluide avec un conduit secondaire respectif (10b) dudit boîtier (10), adapté à acheminer un gaz ;
- un distributeur de filaments (3) en communication de passage de fluide avec ledit distributeur (2), configuré pour distribuer des filaments polymériques à partir dudit fluide polymérique et comprenant au moins :
- une filière (4) adaptée à former lesdits filaments polymériques et comprenant :
- une pluralité de saillies (40) mutuellement juxtaposées et comprenant chacune au moins une sortie principale (40a) configurée pour guider ledit fluide polymérique selon une direction de distribution respective (4a),
- pour chaque saillie (40), une paire de sorties secondaires (41) disposées sur des côtés opposés par rapport à ladite saillie respective (40), formées sur la saillie (40) elle-même ou sur les côtés de la saillie (40), et
- une lame d'air (5) adaptée à recevoir ledit gaz à partir desdites sorties secondaires (41) afin de guider lesdits filaments polymériques sortant dudit distributeur de filaments (3) et adaptée à acheminer des jets dudit gaz pour converger vers chacune desdites directions de distribution (4a) de manière à guider lesdits filaments polymériques ;
- un dispositif de transfert (6) configuré pour placer en communication de passage de fluide au moins chaque accès secondaire (21) avec chaque dite paire de sorties secondaires (41) et comprenant au moins une entrée principale (60) en communication de passage de fluide avec ledit accès principal (20), une pluralité de branches principales (61) toutes en communication de passage de fluide avec ladite entrée principale (60), ou chacune avec une dite entrée principale respective (60), et chacune avec une sortie principale respective (40a), une pluralité d'entrées secondaires (62) chacune en communication de passage de fluide avec un accès secondaire respectif (21), et une pluralité de paires de branches secondaires (63), dans lesquelles, dans chaque paire, lesdites branches secondaires (63) sont en communication de passage de fluide chacune avec une entrée secondaire respective (62) et chacune avec une sortie secondaire respective (41) de ladite paire respective de sorties secondaires (41);
- ledit distributeur (2) et ledit distributeur de filaments (3) s'étendant principalement selon une direction principale (1a), chacune desdites branches principales (61) définissant une extrémité principale (61a) opposée à ladite entrée principale (60), chacune desdites branches secondaires (63) définissant une extrémité secondaire (63a) opposée à ladite entrée secondaire (62) ; et ladite installation (1) étant **caractérisée en ce que**
- lesdites extrémités (61a, 63a) sont réparties dans un plan principal (1b) parallèle à ladite direction principale (1a), de telle sorte que, pour chaque saillie (40) et pour chaque groupe comprenant une dite extrémité principale (61a) et une paire d'extrémités secondaires adjacentes (63a), lesdites extrémités secondaires (63a) sont mutuellement décalées par rapport aux directions normales à ladite direction principale (1a).

2. Installation (1) selon la revendication 1, dans laquelle lesdites directions de distribution (4a) sont mutuellement parallèles.

3. Installation (1) selon l'une quelconque des revendications précédentes, dans laquelle lesdites saillies (40) sont monobloc.

4. Installation (1) selon l'une quelconque des revendications précédentes, dans laquelle ledit distributeur (2) comprend une pluralité d'accès secondaires et ledit dispositif de transfert (6) est en outre configuré pour placer en communication de passage de fluide chaque accès principal (20) avec une sortie principale respective (40a).

5. Installation (1) selon l'une quelconque des revendications précédentes, dans laquelle ledit dispositif de transfert (6) est en outre configuré pour placer en communication de passage de fluide ledit accès principal (20) avec chacune desdites sorties principales (40a).

6. Installation (1) selon l'une quelconque des revendications précédentes, dans laquelle ledit dispositif de transfert (6) est entièrement inclus dans ladite filière (4) et ledit distributeur (2) comprend un canal principal d'alimentation (22) configuré pour placer en communication de passage de fluide ledit accès principal (20) et ladite entrée principale (60), ainsi qu'une pluralité de canaux secondaires d'alimentation (23), chacun configuré pour placer en communication de passage de fluide un accès secondaire respectif (21) avec une entrée secondaire respective (62).

7. Installation (1) selon l'une quelconque des revendications 1 à 5, dans laquelle ledit dispositif de transfert (6) est intégralement compris dans ledit distributeur (2), ladite entrée principale (60) correspond audit accès principal (20), chaque entrée secondaire (62) correspond à un accès secondaire respectif (21), et ladite filière (4) comprend, pour chaque dite saillie (40), un canal principal d'alimentation (42) configuré pour placer en communication de passage de fluide une dite branche principale respective (61) et une sortie principale respective (40a), ainsi qu'une paire de canaux secondaires de distribution (43), chacun configuré pour placer en communication de passage de fluide une branche secondaire respective (63) d'une même dite paire de branches secondaires (63) avec une dite sortie secondaire respective (41) d'une même dite paire de sorties secondaires (41).

8. Installation (1) selon l'une quelconque des revendications précédentes, dans laquelle ledit distributeur (2) comprend une plaque de support (7) et une plaque de répartition (8), et ledit dispositif de transfert (6) est intégralement compris dans une ou plusieurs parties situées entre ladite plaque de support (7) et ladite plaque de répartition (8).

9. Installation (1) selon l'une quelconque des revendications précédentes, dans laquelle lesdites extrémités (61a, 63a) sont réparties dans un plan principal (1b) de telle sorte que toutes lesdites extrémités (61a, 63a) d'un même dit groupe sont mutuellement décalées par rapport aux directions normales à ladite direction principale (1a).

10. Installation (1) selon l'une quelconque des revendications précédentes, dans laquelle, pour chaque saillie (40) et pour chaque dit groupe, au moins une dite extrémité principale (61a) et une dite extrémité secondaire (63a) sont mutuellement alignées selon des directions de développement (6a) transversales à ladite direction principale (1a).

11. Installation (1) selon l'une quelconque des revendications précédentes, dans laquelle ladite filière (4) comprend au moins un logement (44) configuré pour loger au moins un filtre (11) et disposé adjacent audit distributeur (2).

12. Installation (1) selon l'une quelconque des revendications précédentes, dans laquelle ledit logement (44) est disposé entre ladite entrée principale (60) et ledit canal principal d'alimentation (22), ou entre chacune desdites branches principales (61) et un canal principal d'alimentation respectif (42).
